# EUROPEAN PATENT APPLICATION

(11) **EP 4 279 273 A1**
(43) Date of publication of application: **22.11.2023**
(21) Application number: 22739458.2
(22) Date of filing: 13.01.2022
(51) Int. Cl.: B32B 27/32, B32B 27/00, B65D 30/10, B65D 33/00

(54) **LAYERED BODY AND PACKAGING BAG**

(30) Priority: 18.01.2021 JP 2021005593
(71) Applicant: Fujimori Kogyo Co., Ltd., Tokyo 112-0002 (JP)
(72) Inventor: KUWABARA Hiroshi, Tokyo 112-0002 (JP); NAMIKI Mariko, Tokyo 112-0002 (JP)
(74) Representative: Lavoix
(86) International application number: PCT/JP2022/000977
(87) International publication number: WO 2022/154053

(57) **Abstract**

A laminated body includes an innermost layer (11a) including a sealant formed of a polyethylene-based resin, and a second layer (11c) formed of a polyethylene-based resin. The second layer (11c) is formed of a biaxially stretched polyethylene-based resin film. The second layer (11c) is joined adjacent to the innermost layer (11a) via an adhesive layer (1 1b). At least one member of a packaging bag (10) is formed of the laminated body.

## Description

### [Technical Field]

The present invention relates to a laminated body and a packaging bag.

Priority is claimed on Japanese Patent Application No. 2021-5593 filed on January 18, 2021, the content of which is incorporated herein by reference.

### [Background Art]

As a conventional packaging bag, a standing pouch having a self-standing property in which a bottom portion film folded in half is disposed between a pair of barrel portion films has been used. Paragraph 0010 of Patent Literautre 1 describes use of a laminated body film having a sealant as an innermost layer and a stretched film as a base material.

As a resin film excellent in terms of being able to be cut by hand, a stretched film is known. Paragraphs 0031 to 0032 of Patent Literautre 2 describe that a multilayer film having a uniaxially stretched film of high-density polyethylene as a base material film has the same property of being able to be cut by hand as the base material film even if a gas barrier layer and a water resistant layer are laminated for use in packaging. Also, Paragraph 0013 of Patent Literautre 2 also describes formation of a heat seal layer in the multilayer film. Paragraphs 0040 to 0042 of Patent Literautre 3 describe a laminated film in which an easily tearable layer formed of a uniaxially stretched film or a biaxially stretched film is adjacent to a sealant layer with or without an adhesive interposed.

### [Citation List]

### [Patent Literature]

[Patent Literature 1] Japanese Unexamined Patent Application, First Publication No. 2006-7630
[Patent Literature 2] Japanese Unexamined Patent Application, First Publication No. 2008-44260
[Patent Literature 3] Japanese Patent No. 6719258

### [Summary of Invention]

### [Technical Problem]

A composite film used for conventional packaging bags is laminated with a heat-adhesive resin (sealant) layer such as polyethylene (PE) on an inner surface, and a base material such as polyethylene terephthalate (PET) having a higher heat resistance than the sealant on an outer surface. When the composite films are thermally adhered, the sealant is melted to join inner surfaces of the composite films together. However, in a packaging bag containing different types of resins, there is a problem in that recycling it as plastic container packaging is difficult.

In recent years, mono-material container packaging using a single resin has been proposed to facilitate recycling. However, when a packaging bag is formed of a film using a single resin, it is difficult to obtain a satisfactory property of being able to be cut by hand.

The present invention has been made in view of the above circumstances, and an objective of the present invention is to provide a laminated body and a packaging bag in which a satisfactory property of being able to be cut by hand can be obtained.

### [Solution to Problem]

In order to solve the above problems, provided is a laminated body including an innermost layer including a sealant formed of a polyethylene-based resin, and a second layer formed of a polyethylene-based resin, in which the second layer is formed of a biaxially stretched polyethylene-based resin film and is joined adjacent to the innermost layer via an adhesive layer.

The second layer may include a printed layer on a surface, and the biaxially stretched polyethylene resin film may be in contact with the adhesive layer on the surface.

The laminated body may include a heat-resistant varnish layer as an outermost layer.

The laminated body may include a third layer formed of a uniaxially stretched polyethylene-based resin film on an outer side of the second layer, and the third layer may be joined adjacent to the second layer via a second adhesive layer.

The uniaxially stretched polyethylene-based resin film may be stretched in an MD direction, and the third layer may include a printed layer on a surface in contact with the second adhesive layer.

Also, the present invention provides a packaging bag, at least one member of the packaging bag is formed of the laminated body.

A portion for opening or cutting the packaging bag may be formed in the laminated body.

The packaging bag may be used for refilling.

### [Advantageous Effects of Invention]

According to the present invention, since the biaxially stretched polyethylene-based resin film is joined adjacent to the innermost layer which is a sealant, a satisfactory property of being able to be cut by hand can be obtained.

### [Brief Description of Drawings]

FIG. 1 is a front view showing a packaging bag of an embodiment.
FIG. 2 is a cross-sectional view taken along line II-II of FIG. 1.
FIG. 3 is a schematic cross-sectional view showing a laminated body of the embodiment.
FIG. 4 is a schematic cross-sectional view showing a laminated body of another embodiment.

### [Description of Embodiments]

Hereinafter, the present invention will be described with reference to preferred embodiments. A laminated body of the embodiment includes an innermost layer including a sealant formed of a polyethylene-based resin, and a second layer formed of a polyethylene-based resin. The second layer is formed of a biaxially stretched polyethylene-based resin film. The second layer is joined adjacent to the innermost layer via an adhesive layer.

The laminated body of the embodiment is formed of a polyethylene-based resin layer mainly composed of a polyethylene-based resin. Therefore, mono-material container packaging can be realized by using the laminated body of the embodiment. Specifically, examples of the polyethylene-based resin layer include the innermost layer, the second layer, the third layer, and the like to be described later, but are not limited to these.

The polyethylene-based resin described above may be an ethylene homopolymer or a copolymer mainly composed of ethylene. As a monomer (comonomer) other than ethylene, one or more of α-olefins such as 1-butene, 1-hexene, and 1-octene, cyclic olefins such as norbornene, vinyl-based monomers such as vinyl acetate, vinyl chloride, and acrylic acid, and the like can be mentioned. When the polyethylene-based resin is copolymerized with a monomer having an ester group such as vinyl acetate, a part of the ester groups may be saponified to form a copolymer containing vinyl alcohol.

A proportion of ethylene in constituent monomers of the polyethylene-based resin is preferably 50% by weight or more, and may be, for example, 80 to 100% by weight. The ethylene or the comonomer may be a compound derived from fossil resources such as petroleum, or may be a compound derived from biomass such as plants. A resin contained in the polyethylene-based resin layer may be only a polyethylene-based resin. The polyethylene-based resin layer may contain an additive besides the resin. The additive is not particularly limited, and examples thereof include an antioxidant, a lubricant, an anti-blocking agent, a flame retardant, an ultraviolet absorber, a light stabilizer, an antistatic agent, a colorant, and a cross-linking agent. The additive may be a component compatible with the resin or may be a component that is not compatible with the resin.

At least a part of the polyethylene-based resin may include a recycled polyethylene-based resin. The recycled polyethylene-based resin may be a polyethylene-based resin obtained by chemical recycling in which a used polyethylene-based resin is decomposed into a monomer such as ethylene and then polymerized again. A polyethylene-based resin obtained by mechanical recycling in which a used polyethylene-based resin is recycled as a polymer through processes such as pulverization and sorting may also be used. A mixture of a recycled polyethylene-based resin and a new polyethylene-based resin may also be used.

The innermost layer can be used for joining the laminated bodies. The innermost layer is preferably formed of an unstretched polyethylene-based resin. As a specific example of a material forming the innermost layer, a polyethylene-based resin with a relatively low density such as, for example, linear low-density polyethylene (LLDPE) and low-density polyethylene (LDPE) can be mentioned. The material forming the innermost layer may be one type of polyethylene-based resin or may be a blend of two or more types of a polyethylene-based resin. A thickness of the innermost layer is not particularly limited, and may be, for example, approximately 60 to 180 µm.

The second layer is laminated on an outer side of the innermost layer in a thickness direction of the laminated body. It is preferable that the second layer can reinforce a mechanical strength of the laminated body when the laminated body is used by being conveyed in a length direction, or the like. In a conventional laminated film, a PET film or the like has been used as a base material layer, but in the laminated body of the embodiment, the polyethylene-based resin film is used as the second layer, and therefore recyclability is improved. Also, if a resin layer with a relatively high density such as MDPE or HDPE is used as the second layer, barrier properties are improved.

The second layer is formed of a biaxially stretched polyethylene-based resin film. As a specific example of a material forming the second layer, a polyethylene-based resin with a relatively low density such as, for example, linear low-density polyethylene (LLDPE) and low-density polyethylene (LDPE) may be used, and a polyethylene-based resin with a relatively high density such as medium density polyethylene (MDPE) and high-density polyethylene (HDPE) may be used. The material forming the second layer may be one type of a polyethylene-based resin or may be a blend of two or more types of a polyethylene-based resin. A thickness of the second layer is not particularly limited, and may be, for example, approximately 10 to 50 µm.

Since the second layer adjacent to the innermost layer is a biaxially stretched polyethylene-based resin layer, a satisfactory property of being able to be cut by hand can be obtained. A stretching direction, a stretching ratio, and the like in the biaxial stretching are not particularly limited, but the second layer may be stretched in a machine direction (MD) and a transverse direction (TD). The stretching ratio is preferably in a range of two to ten in both the MD direction and the TD direction. The stretching ratio in the MD direction and the stretching ratio in the TD direction may be the same as or different from each other.

The laminated body can include a polyethylene-based resin layer in addition to the innermost layer and the second layer. For example, a third layer formed of a polyethylene-based resin may be laminated on an outer side of the second layer. The third layer may be formed of a stretched polyethylene-based resin, or may be formed of an unstretched polyethylene-based resin.

The third layer is preferably formed of a uniaxially stretched polyethylene-based resin film. Thereby, tearing in a uniaxially stretched direction is facilitated, and a straight cutting property can be improved. When the third layer is laminated on the laminated body, only the innermost layer may be a sealant layer, or the innermost layer and the second layer may be sealant layers. When printing is performed on the third layer, the uniaxially stretched polyethylene-based resin film is preferably stretched in the MD direction from the perspective of preventing misalignment in multicolor printing and controlling a pitch of the printing.

As a specific example of a material forming the third layer, a polyethylene-based resin with a relatively high density such as, for example, medium density polyethylene (MDPE) and high-density polyethylene (HDPE) can be mentioned. The material forming the third layer may be one type of a polyethylene-based resin or may be a blend of two or more types of a polyethylene-based resin. A thickness of the third layer is not particularly limited, and may be, for example, approximately 10 to 50 µm.

A proportion occupied by a thickness of the innermost layer with respect to a thickness of the laminated body is preferably 50% or more, and may be approximately 60%, 70%, 80%, 90%, 95%, or an intermediate value of these. A proportion occupied by a total thickness of the polyethylene-based resin layers (the innermost layer, the second layer, the third layer, and the like) with respect to the thickness of the laminated body is preferably 50% or more, and may be approximately 60%, 70%, 80%, 90%, 95%, 99%, or an intermediate value of these.

The innermost layer and the second layer are preferably joined to each other with an adhesive layer interposed therebetween. Also, if the laminated body includes a third layer on an outer side of the second layer, the second layer and the third layer are preferably joined to each other with a second adhesive layer interposed therebetween. A material, a thickness, and the like of the second adhesive layer may be the same as or different from a material, a thickness, and the like of the adhesive layer that joins the innermost layer and the second layer. Hereinafter, the term "adhesive layer" may be simply used including the second adhesive layer.

The adhesive layer may be formed of an adhesive or an anchor coating agent. A material forming the adhesive layer is not particularly limited, and examples thereof include a urethane-based compound, an epoxy-based compound, an isocyanate-based compound, polyethyleneimine, an organic titanium compound such as titanium alkoxide, and the like. A thickness of the adhesive layer may be, for example, approximately 0.1 to 10 µm, approximately 1 to 6 µm, and approximately 3 to 4 µm. The adhesive layer may contain a resin, or may be an adhesive layer not containing a resin.

In the laminated body, a printed layer may be laminated between the innermost layer and the second layer. If the laminated body includes a third layer on an outer side of the second layer, a printed layer may be laminated between the second layer and the third layer. A position of the printed layer is not particularly limited, and may be, for example, on an outer surface of the innermost layer, an inner surface or an outer surface of the second layer, an inner surface or an outer surface of the third layer, or the like.

The printed layer can be formed by printing ink solidly or in a pattern by a printing method such as gravure printing, letterpress printing, offset printing, screen printing, or inkjet. A thickness of the printed layer is not particularly limited, and may be approximately 0.5 to 10 µm. The printed layer may be formed on the entire surface of the laminated body, or may be formed on a portion within a surface of the laminated body. Two or more printed layers may be overlapped. From the perspective of being able to be cut by hand, the printed layer is preferably omitted at an opening portion.

An ink for forming the printed layer may contain a coloring material such as a pigment and a dye, and a binder. The binder is not particularly limited, and examples thereof may include polyamide, polyurethane, polyester, polyvinyl chloride, polyvinyl acetate, a vinyl chloride-vinyl acetate copolymer, an acrylic-based polymer, polybutadiene, cyclized rubber, and the like. The ink may contain a solvent such as water, an organic solvent, and a vegetable oil. After printing, the ink can be dried by volatilizing the solvent, curing the ink, or the like. In order to promote drying of the ink, heating, ultraviolet irradiation, or the like may be performed. The printed layer may contain a resin, or may be a printed layer not containing a resin.

The laminated body may include a heat-resistant varnish layer as an outermost layer. The heat-resistant varnish layer is preferably a layer having superior heat resistance than the second layer or the third layer. When the heat-resistant varnish layer is laminated as the outermost layer of the laminated body, adhesion (blocking) of outer surfaces of the laminated bodies can be suppressed when an inner surface of the laminated body is heated or caused to generate heat to be joined (sealed).

The heat-resistant varnish layer may be formed by applying varnish on the outer surface of the laminated body, and then improving heat resistance of the coated film by drying, curing, or the like. The varnish may contain a resin and a solvent, or may contain a solventless resin. The resin used for the varnish is not particularly limited, and examples thereof may include one or more of a urethane resin, an acrylic resin, an epoxy resin, a polymethylpentene resin, a cyclic olefin-based resin, an unsaturated polyester resin, an alkyd resin, a polyimide resin, a polyamide-imide resin, a polyamide resin, and the like. The solvent for the varnish can be appropriately selected in consideration of the performance or the like when it is applied to the polyethylene-based resin.

The heat-resistant varnish layer can be directly formed without an adhesive layer or the like interposed between itself and the second layer or the third layer. When a printed layer is formed on an outer surface of the second layer or the third layer, the heat-resistant varnish layer may be overlaid on the printed layer. In this case, the printed layer can be protected by the heat-resistant varnish layer of the outermost layer. The heat-resistant varnish layer may be formed on the entire surface of the second layer or the third layer. The heat-resistant varnish layer may be formed on a partial region of the second layer or the third layer.

A thickness of the heat-resistant varnish layer is preferably, for example, 10 µm or less. A specific example of the thickness of the heat-resistant varnish layer is not particularly limited, and may be approximately 10 µm, 8 µm, 6 µm, 5 µm, 4 µm, 3 µm, 2 µm, 1 µm, 0.5 µm, 0.2 µm, 0.1 µm, or an intermediate value of these.

As a different material layer other than the resin layer, an adhesive layer, a heat-resistant varnish layer, a deposition layer, a printed layer, a coating layer, or the like may be laminated on the laminated body. As the different material, a metal such as aluminum, an inorganic compound such as silica and alumina, and the like can be mentioned. The printed layer, the coating layer, the adhesive layer, or the like may contain a resin other than polyethylene as a material of an ink, a paint, an adhesive, or the like. A method of forming the laminated body is not particularly limited, and examples thereof may include dry lamination, extrusion lamination, heat lamination, co-extrusion, coating, and the like. Different methods may be used to laminate each of the layers.

In the laminated body of the embodiment, a layer with a small thickness such as the adhesive layer, the printed layer, and the heat-resistant varnish layer may be a layer containing a resin. A layer with a relatively large thickness other than those is preferably only the polyethylene-based resin layer. A thickness of the layer with a small thickness may be, for example, 10 µm or less or 5 µm or less as a thickness of each layer or a total thickness of the layers.

The second layer is preferably adjacent to or close to the innermost layer in a thickness direction of the laminated body. The second layer may be joined to the adjacent innermost layer via the adhesive layer. The second layer may be joined to the adjacent innermost layer via the printed layer and the adhesive layer. When another layer (an adhesive layer, a printed layer, or the like) is interposed between the innermost layer and the second layer, a thickness of each layer or a total thickness of the layers may be, for example, 10 µm or less or 5 µm or less.

When the polyethylene-based resin layer is used for two layers of the innermost layer and the second layer, examples of a layer configuration of the laminated body include "innermost layer/adhesive layer/second layer," "innermost layer/adhesive layer/second layer/heat-resistant varnish layer," "innermost layer/adhesive layer/second layer/printed layer," "innermost layer/adhesive layer/second layer/printed layer/heat-resistant varnish layer," "innermost layer/adhesive layer/printed layer/second layer," "innermost layer/adhesive layer/printed layer/second layer/heat-resistant varnish layer," "innermost layer/adhesive layer/printed layer/second layer/printed layer," "innermost layer/adhesive layer/printed layer/second layer/printed layer/heat-resistant varnish layer," and the like.

When the polyethylene-based resin layer is used for three layers of the innermost layer, the second layer, and the third layer, examples of a layer configuration of the laminated body include "innermost layer/adhesive layer/second layer/adhesive layer/third layer," "innermost layer/adhesive layer/second layer/adhesive layer/third layer/heat-resistant varnish layer," "innermost layer/adhesive layer/second layer/adhesive layer/third layer/printed layer," "innermost layer/adhesive layer/second layer/adhesive layer/third layer/printed layer/heat-resistant varnish layer," "innermost layer/adhesive layer/second layer/adhesive layer/printed layer/third layer," "innermost layer/adhesive layer/second layer/adhesive layer/printed layer/third layer/heat-resistant varnish layer," "innermost layer/adhesive layer/second layer/adhesive layer/printed layer/third layer/printed layer," "innermost layer/adhesive layer/second layer/adhesive layer/printed layer/third layer/printed layer/heat-resistant varnish layer," and the like.

The laminated body can be used for manufacturing a packaging bag. At least one member of the packaging bag is preferably formed of the laminated body. Applications of the packaging bag are not particularly limited, such as for disposable use, refill use, storage use, use in storing articles or the like, and the like, and it is particularly suitable for an application in which a main body container that is used when consuming contents is refilled with the contents once or a plurality of times. In this case, the main body container can be made durable for long-term use, and packaging of the refill container can be simplified. Also, recycling is facilitated at the time of disposing of the refill container after the contents have been used up.

It is preferable that a portion for opening or cutting the packaging bag be formed in the laminated body. The portion to be opened or cut may have a structure that has been processed in a thickness direction of the film such as perforations, notches, and half-cut grooves, may have a shape that suggests opening or cutting such as a pouring port that protrudes thinly within a plane of the film, and may be indicated by arrows, lines, dots, or the like by printing or the like. The cutting of the packaging bag is not limited to the cutting of the opening portion, and may be used to cut out between or around the packaging bag at a portion in which two or more packaging bags are continuously formed, or at a portion in which a tag, display portion, or the like is continuously formed around the packaging bag.

When the packaging bag includes a barrel member and a bottom member, the laminated body is preferably used for the barrel member having an opening portion. At a lower portion of the packaging bag, the bottom member folded in half along a fold line may be joined between a pair of barrel members. In order to facilitate opening of the packaging bag, a cut such as a notch may be formed on a circumferential edge of the opening portion. If a cut is formed on a seal portion that joins inner surfaces of the laminated body, airtightness of the packaging bag can be secured.

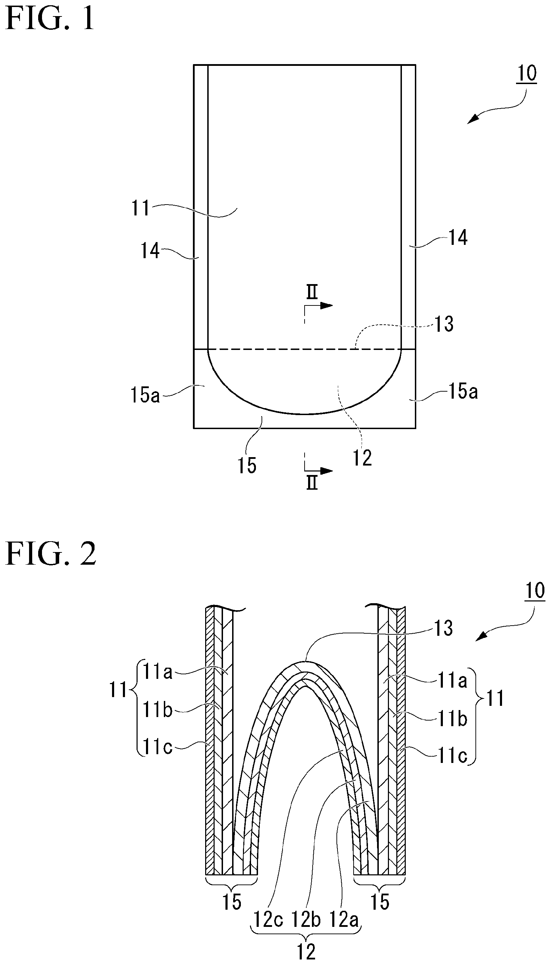

FIG. 1 shows an external appearance of a packaging bag 10 of the embodiment. FIG. 2 is a cross-sectional view taken along line II-II of FIG. 1. The front and rear sides of the packaging bag 10 correspond to a direction perpendicular to the paper surface in FIG. 1. The front and rear sides of the packaging bag 10 correspond to a left-right direction in FIG. 2.

As shown in FIG. 1, the packaging bag 10 is formed of a pair of barrel members 11, and a bottom member 12 folded in half along a fold line 13. The bottom member 12 is folded along the fold line 13.

The barrel member 11 and the bottom member 12 are formed of a polyethylene-based resin layer mainly composed of a polyethylene-based resin. As the polyethylene-based resin layer, specifically, a sealant layer 11a, a base material layer 11c, an innermost layer 12a, a reinforcing layer 12c, an outer layer (not shown in the drawings), and the like to be described later can be mentioned.

The barrel members 11 are each disposed in the front and rear of the packaging bag 10. Barrel seal portions 14 are formed at the left and right of the packaging bag 10 above the fold line 13. In the barrel seal portions 14, inner surfaces of the front and rear barrel members 11 are joined together along the left and right circumferential edge portions of the packaging bag 10.

The bottom member 12 is sandwiched between the front and rear barrel members 11 with the fold line 13 on an upper side. In a plan view shown in FIG. 1, the fold line 13 is an upper end of the bottom member 12. Below the fold line 13, a bottom seal portion 15 in which an inner surface of the bottom member 12 is joined to an inner surface of the barrel member 11 is formed. As shown in FIG. 2, the bottom seal portion 15 joins each portion of the bottom member 12 defined by the fold line 13 to the barrel member 11 on the same side.

An unsealed portion of the packaging bag 10 surrounded by the barrel seal portions 14 and the bottom seal portions 15 forms a storage space for contents inside the packaging bag 10. If the bottom member 12 is unfolded forward and rearward, the packaging bag 10 can stand on its own with the bottom member 12 on a lower side in a vertical direction. Inner surfaces of the barrel member 11 and the bottom member 12 are surfaces on a side in contact with the storage space for the contents. Outer surfaces of the barrel member 11 and the bottom member 12 are surfaces on a side opposite to the inner surfaces.

The barrel members 11 are each formed of a laminated body including the sealant layer 11a formed of a polyethylene-based resin, an adhesive layer 11b, and the base material layer 11c formed of a polyethylene-based resin. The sealant layer 11a is an innermost layer disposed on the inner surface of the barrel member 11. The base material layer 11c is a second layer. The adhesive layer 11b is interposed between the sealant layer 11a and the base material layer 11c. The base material layer 11c is joined adjacent to the sealant layer 11a via the adhesive layer 11b.

The bottom member 12 includes the innermost layer 12a including a sealant formed of a polyethylene-based resin, and the reinforcing layer 12c (second layer) formed of a polyethylene-based resin. An adhesive layer 12b may be interposed between the innermost layer 12a and the reinforcing layer 12c. The adhesive layer 12b may be omitted, and the reinforcing layer 12c may be directly joined adjacent to the innermost layer 12a.

The laminated body forming the bottom member 12 may include a heat-resistant varnish layer (not shown in the drawings) as an outermost layer. For example, the heat-resistant varnish layer may be locally formed in a region of the outer surface of the bottom member 12 corresponding to the bottom seal portion 15. The reinforcing layer 12c may be exposed on the outer surface of the bottom member 12 in a region in which the heat-resistant varnish layer is not formed. In this case, the reinforcing layers 12c may be joined to face each other at side end portions 15a on the left and right of the bottom seal portion 15 or the like with the heat-resistant varnish layer omitted.

Although dimensions of the packaging bag formed of the laminated body are not particularly limited, for example, in an application of a refill container, a height in the vertical direction may be approximately 100 to 500 mm, a width in a left-right direction may be approximately 70 to 300 mm, and a filling amount may be approximately 100 cm³ to 5000 cm³. As a state of the contents, fluids such as liquids, powders, and granules, and solids such as articles can be mentioned. Types of the contents are not particularly limited, and examples thereof include detergents, drugs, cosmetics, pharmaceutical products, beverages, seasonings, inks, paints, fuels, and the like.

The packaging bag may include a filling port, a pouring port, and the like. For example, an opening can be provided between the front and rear barrel members at an upper portion of the packaging bag, and can be used for filling or pouring the contents. After filling it with the contents, the barrel members may be joined to seal the packaging bag. At the time of opening the packaging bag, since the laminated body has a satisfactory property of being able to be cut by hand, the portion in which the barrel members have been joined can be easily torn. The pouring port may be formed in a shape protruding thinly at an upper portion or a corner of the packaging bag.

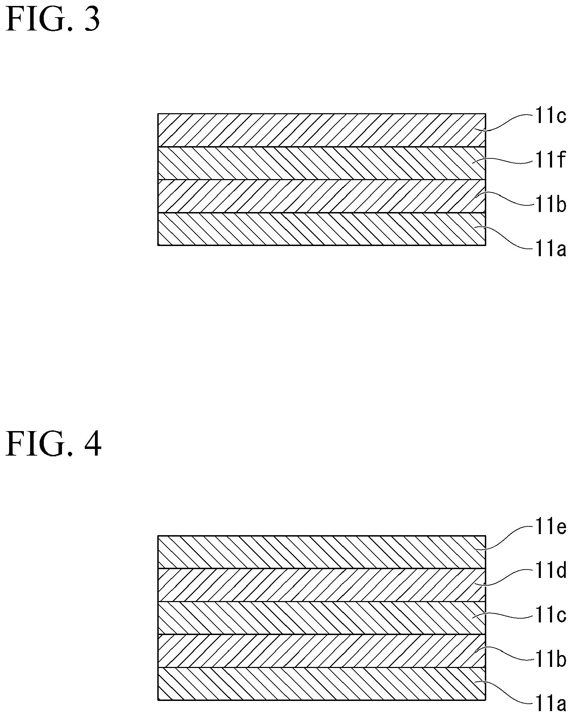

FIG. 3 is a schematic cross-sectional view showing the laminated body of the embodiment. In this laminated body, the sealant layer 11a, the adhesive layer 11b, a printed layer 11f, and the base material layer 11c are laminated in that order.

FIG. 4 is a schematic cross-sectional view showing a laminated body of another embodiment. In this laminated body, a sealant layer 11a, an adhesive layer 11b, a base material layer 11c, a second adhesive layer 11d, and a third layer 11e are laminated in that order.

A method of recycling after using the laminated body or the packaging bag of the embodiment is not particularly limited, and can be appropriately selected according to a state or the like at the time of collection. In the laminated body of the embodiment, since a proportion of the polyethylene-based resin can be increased, both the chemical recycling and the mechanical recycling described above are possible. When the laminated body or the packaging bag of the embodiment is recycled, it can also be recycled into products of the same type such as laminated bodies or packaging bags. Materials obtained by recycling may be utilized in products such as paints, molded products, and hydrocarbon oils.

While the present invention has been described above with reference to preferred embodiments, the present invention is not limited to the above-described embodiments, and various modifications can be made within a range not departing from the gist of the present invention. Modifications include additions, substitutions, omissions, and other changes of constituent elements.

The laminated body of the embodiment is in a form of a laminated film mainly composed of a polyethylene-based resin, is not limited to applications of packaging bags such as pouches, bags, and containers, and packaging laminated bodies such as packaging films, and can be used for various applications. If the laminated body is a flexible laminated film, a packaging bag for soft packaging can be formed. The packaging bag may only be formed of the laminated body described above, or may be combined with attachment members such as labels, tags, straws, and outer boxes. From the perspective of recycling, the attachment members are preferably separable from the packaging bag.

### [Examples]

Hereinafter, description will be made more specifically with examples, but the present invention is not limited to these examples.

### (Example 1)

An innermost layer can be formed from an unstretched PE film. A second layer can be formed from a biaxially stretched PE film. A printed layer may be formed on an inner surface of the second layer, and a heat-resistant varnish layer may be formed on an outer surface of the second layer. A laminated body of example 1 can be formed by laminating the innermost layer and the second layer by a dry lamination method with an adhesive layer interposed therebetween.

### (Example 2)

An innermost layer can be formed from an unstretched PE film. A second layer can be formed from a biaxially stretched PE film. A third layer can be formed from a uniaxially stretched PE film. A printed layer may be formed on an inner surface of the third layer. A laminated body of example 2 can be formed by laminating the innermost layer, the second layer, and the third layer by a dry lamination method with adhesive layers interposed therebetween.

### (Comparative example 1)

An innermost layer is formed from an unstretched PE film. A base material layer is formed from a uniaxially stretched polyester (PET) film having a printed layer on an inner surface thereof. The laminated body of comparative example 1 is formed by laminating the innermost layer and the base material layer by a dry lamination method with an adhesive layer interposed therebetween.

### (Comparative example 2)

An innermost layer is formed from an unstretched PE film. A base material layer is formed from a uniaxially stretched PE film having a printed layer on an inner surface thereof. The laminated body of comparative example 2 is formed by laminating the innermost layer and the base material layer by a dry lamination method with an adhesive layer interposed therebetween.

The laminated body of comparative example 1 is not easy to recycle because different types of resins (PE and PET) are laminated. Even though the laminated body of comparative example 2 includes the uniaxially stretched PE film, a property of being able to be cut by hand is poor because the innermost layer is not easily torn. On the other hand, the laminated bodies of examples 1 and 2 have a satisfactory property of being able to be cut by hand because the biaxially stretched PE film is laminated adjacent to the innermost layer while they are mainly formed of the PE resin. Also, the laminated body of example 2 has an excellent straight cutting property because the uniaxially stretched PE film is laminated.

### [Industrial Applicability]

According to the present invention, a satisfactory property of being able to be cut by hand can be obtained, and therefore industrial application is possible.

### [Reference Signs List]

10 Packaging bag
11 Barrel member
11a Sealant layer
11c Base material layer
11b Adhesive layer
11d Second adhesive layer
11e Third layer
11f Printed layer
12 Bottom member
12a Innermost layer
12b Adhesive layer
12c Reinforcing layer
13 Fold line
14 Barrel seal portion
15 Bottom seal portion
15a Side end portion

## Claims

1. A laminated body comprising:
an innermost layer including a sealant formed of a polyethylene-based resin; and
a second layer formed of a polyethylene-based resin, wherein
the second layer is formed of a biaxially stretched polyethylene-based resin film and is joined adjacent to the innermost layer via an adhesive layer.

2. The laminated body according to claim 1, wherein
the second layer includes a printed layer on a surface, and the biaxially stretched polyethylene resin film is in contact with the adhesive layer on the surface.

3. The laminated body according to claim 1 or 2, wherein
the laminated body includes a heat-resistant varnish layer as an outermost layer.

4. The laminated body according to any one of claims 1 to 3, wherein
the laminated body includes a third layer formed of a uniaxially stretched polyethylene-based resin film on an outer side of the second layer, and the third layer is joined adjacent to the second layer via a second adhesive layer.

5. The laminated body according to claim 4, wherein
the uniaxially stretched polyethylene-based resin film is stretched in an MD direction, and the third layer includes a printed layer on a surface in contact with the second adhesive layer.

6. A packaging bag, at least one member of the packaging bag being formed of the laminated body according to any one of claims 1 to 5.

7. The packaging bag according to claim 6, wherein
a portion for opening or cutting the packaging bag is formed in the laminated body.

8. The packaging bag according to claim 6 or 7, being used for refilling.
